# FASCICULE DE BREVET EUROPEEN

(11) **EP 0 616 915 B1**
(45) Date de publication et mention de la délivrance du brevet: **20.11.1996**
(21) Numéro de dépôt: 94470006.1
(22) Date de dépôt: 21.03.1994
(51) Int. Cl.: B60J 7/06, B60J 5/06

(54) **Dispositif pour débâcher un véhicule et libérer le plateau porteur de toute superstructure**
Vorrichtung zum Abnehmen der Plane eines Fahrzeugs und zum Räumen der Ladefläche von allen Aufbauten
Arrangement to uncover the loading platform of a vehicle and to clear the loading platform from the superstructure

(30) Priorité: 22.03.1993 FR 9303420
(43) Date de publication de la demande: 28.09.1994
(73) Titulaire: E.C.V.I., F-54710 Ludres (FR)
(72) Inventeur: Mengel, Philippe, F-54210 Lupcourt (FR)
(74) Mandataire: Poupon, Michel

(56) Documents cités:
- EP-A- 0 273 740
- EP-A- 0 421 554
- DE-A- 1 505 367
- DE-A- 2 436 794
- US-A- 5 080 422

## Description

La présente invention concerne un dispositif pour le bâchage-débâchage rapide d'un véhicule, par exemple un véhicule ou une remorque de type routier.

Plus particulièrement le dispositif concerne les véhicules comportant un moyen de levage de la charge, par exemple un bras de grue disposé à l'arrière de la cabine de conduite.

On connaît déjà des dispositifs de bâchage-débâchage perfectionnés qui permettent de plier les panneaux latéraux et/ou le toit de la bâche, puis d'empiler les plis à proximité d'un montant d'extrémité avant ou arrière de la structure rigide.

La demande française 2 676 692 décrit un dispositif de ce type qui comporte en outre des montants ou ranchers coulissants.

Le principal inconvénient de tous les systèmes connus est la présence de la structure qui reste fixe et gêne l'évolution de l'appareil de chargement-déchargement.

Le problème à résoudre consiste à concevoir un dispositif permettant de dégager intégralement le plateau du véhicule en quelques secondes, sans effort ni risque pour l'utilisateur, sans qu'il reste d'ossature, la bâche pliée devant occuper un encombrement minimal.

Ceci pour rendre possible l'évolution de tous moyens de manutention, sans aucun risque d'accrocher des parties fixes.

Ce problème n'est pas résolu dans les documents US-A-5.080.422, US-A-3.326.598, EP-A-0.273.740, GB-A-2.212.120, DE-A-1.505.367.

En effet, aucun d'entre eux ne résoud la difficulté d'un pliage régulier de la bâche, indispensable à l'empilage des arceaux les un contre les autres et à l'obtention de l'encombrement minimal de la bâche pliée, la difficulté du pliage de la bâche étant due essentiellement à sa rigidité.

En outre, pour chacun d'entre eux un élément au moins de la superstructure tel que panneau ou poteau, est fixe et reste en place à l'avant et/ou à l'arrière du plateau après débâchage, et élément fixe étant nécessaire à l' accrochage de la bâche dépliée.

Conformément à l'invention le problème est résolu par un dispositif de bâchage et débâchage pour véhicule, en particulier pour véhicule ou semi-remorque de type routier, du type composé d'un ensemble d' arceaux montés sur un plateau et supportant une bâche pliable, le dispositif comportant des moyens de déplacement des arceaux porteurs de bâche aptes à déplacer lesdits arceaux depuis une position dans laquelle la bâche est déployée et installée au-dessus du plateau jusqu'à une position dans laquelle la bâche est pliée, caractérisé en ce qu'il comporte une combinaison de moyens afin que la bâche pliée occupe un encombrement minimal, à savoir en combinaison :
- au moins un arceau d'entraînement terminé à chacune de ses extrémités par un chariot de roulement à quatre galets, deux galets supérieurs et deux galets inférieurs aptes à rouler de part et d'autre d'un rail horizontal,
- une pluralité d' arceaux intermédiaires à au moins trois galets dont deux galets inférieurs aptes à rouler, avec au moins un galet supérieur, de part et d'autre d'un rail horizontal,
- une bâche en trois parties, toiture et deux faces latérales, portée par les arceaux coulissants, tendue par des compas quand le véhicule est bâché, et formant des plis réguliers sous l'effet d' écarteurs lorsqu'elle est pliée.

De plus chaque rail est fixé latéralement sur le bord de rive sur plateau de façon à conserver une largeur de plateau normalisée sans augmenter la hauteur.

En outre, les extrémités inférieures d'un arceau d' entrainement sont solidarisées à deux chaînes d'entrainement sans fin reliées par des renvois à deux chaînes centrales actionnées par un moteur.

Pour d'une part réduire le nombre d' arceaux et d'autre part faciliter la tension de la bâche en position de bâchage et la formation des plis pour le débâchage, chaque arceau mobile comporte un écarteur qui s'écarte vers l'extérieur lorsque l'on plie la bâche et deux arceaux voisins sont réunis par des compas.

On comprendra mieux l'invention à l'aide de la description qui suit faite en référence aux figures annexées suivantes :
- **Figures 1 à 4** : schéma montrant différentes étapes du débâchage d'un camion équipé selon l'invention depuis la position de fermeture en figure 1 jusqu'à la position de déchargement en figure 4,
- **Figure 5** : vue latérale de trois arceaux de la structure selon l'invention coulissants sur un rail,
- **Figure 6** : vue de détail du montage d'un arceau d'entrainement,
- **Figure 7** : vue de détail du montage d'un arceau intermédiaire,
- **Figure 8** : coupe AA de la figure 7,
- **Figure 9** : vue d'ensemble du dispositif d'entrainement à chaîne.

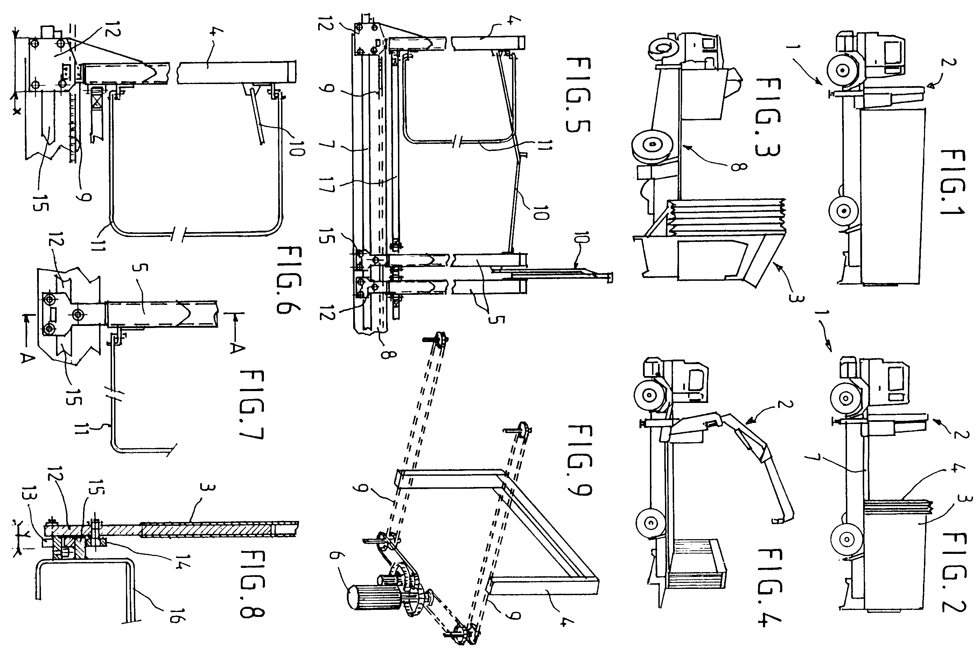

Les figures 1 à 4 montrent un dispositif selon l'invention installé non limitativement sur un camion (1) comportant un bras de manutention (2) entre la cabine de conduite et la bâche (3) du camion.

La bâche (3) est formée classiquement de trois parties : une toiture avec rabats et deux faces latérales, et elle est portée par une structure selon l'invention composée d'arceaux coulissants (4,5) par les galets (6) de leurs extrémités inférieures, sur deux rails (7) positionnés à droite et à gauche sur les bords de rive du plateau (8).

La figure 5 montre plus en détail la structure selon l'invention. L'arceau d'entrainement (4) en forme de U retourné est terminé à chacune de ses extrémités par un chariot de roulement à quatre galets et il est solidaire des extrémités d'une chaîne d'entrainement (9) ou d'un autre moyen équivalent. Les arceaux intermédiaires (5) sont terminés par des chariots à trois galets. Deux arceaux voisins sont réunis classiquement par des compas (10) pour tendre la bâche quand le camion est bâché.

Chaque arceau mobile comporte un écarteur (11) de type connu et qui s'écarte vers l'extérieur lorsqu'on plie la bâche de façon à former des plis réguliers.

Les figures 6 à 8 montrent en détail les éléments de guidage et de coulissement des arceaux. Un chariot (12) porte un ou plusieurs galets inférieurs (13) et un ou plusieurs galets supérieurs (14) qui sont aptes à rouler de part et d'autre d'un rail horizontal (15) par exemple celui de la figure 8, fixé sur le bord de rive (16) du plateau (8) du camion. Les rails sont spécialement renforcés pour supporter les chocs relatifs au chargement par chariot élevateur.

On note l'importance de l'optimisation des dimensions des chariots (12) à savoir une largeur X minimale pour un guidage de qualité en un encombrement minimal lors de l'empilement des arceaux et une épaisseur réduite Y pour permettre un montage latéral sur les bords de rives sans dépasser les normes de largeur du plateau.

La figure 9 représente schématiquement le dispositif d'entrainement, par exemple à chaîne, (9) ou équivalent, qui comporte une chaîne sans fin de chaque côté du camion, solidarisée à l'arceau d'entrainement, et reliée par des renvois à deux chaînes centrales actionnées par un moteur (6) hydraulique ou équivalent pouvant tourner dans les deux sens de rotation et placées de préférence sous le plateau (8) et à l'arrière de celui-ci.

Le dispositif fonctionne comme suit :

Les arceaux munis de galets aux extrémités inférieures coulissent sur deux rails positionnés longitudinalement. L'arceau (4) situé le plus à l'extrémité est entrainé par l'intermédiaire de chaînes (9) ou courroies vers l'avant ou l'arrière au moyen d'un moteur hydraulique ou électrique. Les autres arceaux (5) étant reliés entre eux dans leur partie supérieure par des compas qui supportent la bâche, sont entrainés à leur tour. L'encombrement de la bâche pliée est minimal pour les raisons suivantes : les arceaux viennent s'empiler au bout du plateau de chargement les uns contre les autres, le nombre d'arceau est limité par la présence des compas supports de bâche, la largeur des chariots (12) est optimale, le pliage de la bâche est favorisé par les écarteurs.

Les figures 1 à 4 illustrent le débâchage du camion à partir d'une position fermée jusqu'à la prise du contenu du plateau par un chariot élevateur.

Le système permet d'une part de dégager quasi-intégralement de plus des 2/3 le plateau en quelques secondes sans effort pour l'utilisateur, et sans qu'il reste d'ossature, d'autre part de réaliser des bâchages-débâchages fréquents car les moyens de coulissement sont résistants et fiables.

Cela rend possible l'évolution d'une grue ou autre sans aucun risque d'accrocher des parties fixes. En outre le système peut être installé sur un plateau standard.

La commande des moteurs peut se faire à partir d'une simple manette de commande placée en tout endroit du camion d'accés facile par exemple près de la cabine de conduite.

Le bâchage se fait en inversant le sens de rotation des moteurs, l'arceau repart vers sa position initiale, puis tend les courroies ou sangles (17) et entraine chacun à son tour les arceaux intermédiaires (4,5).

Une fois la bâche déployée, on la fixe rapidement avec des moyens d'accrochage par exemple de type "SCRATCH" (R) sur toute la longueur de la carrosserie.

L'application de l'invention n'est pas limitée aux véhicules routiers, on peut l'appliquer aux wagons et aux péniches par exemple.

Des variantes de réalisation peuvent être prévues sans sortir du cadre de l'invention. A titre d'exemple :
- la face avant peut être tôlée et renforcée, ou réhaussable par un moyen hydraulique ou équivalent, pour permettre le passage d'une grue,
- la face arrière peut comporter un cadre de porte fixe avec deux portes, un hayon, etc...
- pour des moteurs hydrauliques, la source hydraulique est fournie par le véhicule et raccordée par deux coupleurs à l'arrière de la berce,
- dans le cas d'un semi-remorque, au-delà de huit mètres, le débâchage est effectué par moitié vers l'avant et vers l'arrière par deux moteurs hydrauliques ; dans ce cas les deux arceaux avant et arrière sont des arceaux d'entrainement,
- on peut modifier la forme des galets et/ou celle des rails, à titre d'exemple on peut utiliser des galets à butée latérale (réalisés par exemple en deux parties accolées de diamètres différents).

Il est possible d'optimiser la longueur débâchée du plateau en installant à l'extrémité des rails une partie pliable en porte à faux de la carrosserie ce qui a pour effet d'empiler l'ensemble des arceaux et bâche au-delà de la longueur carrossable.

## Revendications

1. Dispositif de bâchage et débâchage pour véhicule, en particulier pour véhicule ou semi-remorque de type routier, du type composé d'un ensemble d' arceaux montés sur un plateau (8) et supportant une bâche pliable (3), le dispositif comportant des moyens de déplacement des arceaux porteurs de bâche aptes à déplacer lesdits arceaux depuis une position dans laquelle la bâche est déployée et installée au-dessus du plateau (8) jusqu'à une position dans laquelle la bâche est pliée, caractérisé en ce qu'il comporte une combinaison de moyens afin que la bâche pliée occupe un encombrement minimal, à savoir en combinaison :
- au moins un arceau d'entraînement (4) terminé à chacune de ses extrémités par un chariot de roulement à quatre galets, deux galets supérieurs (14) et deux galets inférieurs (13) aptes à rouler de part et d'autre d'un rail horizontal (15),
- une pluralité d' arceaux intermédiaires (5) à au moins trois galets dont deux galets inférieurs aptes à rouler, avec au moins un galet supérieur, de part et d'autre d'un rail horizontal (15),
- une bâche en trois parties, toiture et deux faces latérales, portée par les arceaux coulissants (4,5), tendue par des compas (10) quand le véhicule est bâché, et formant des plis réguliers sous l'effet d' écarteurs (11) qui s' écartent vers l'extérieur lorsque l'on plie la bâche.

2. Dispositif selon la revendication 1, caractérisé en ce que chaque rail horizontal (15) est fixé latéralement sur le bord de rive du plateau (8).

3. Dispositif selon l'une au moins des revendications précédentes caractérisé en ce que les extrémités inférieures d'un arceau d'entrainement (4) sont solidarisées à deux chaînes d'entrainement sans fin reliées par des renvois à deux chaînes centrales actionnées par un moteur (6).

4. Dispositif selon l'une au moins des revendications précédentes caractérisé en ce que chaque rail (15) comporte une extension pliable apte à porter l'ensemble arceaux et bâche au-delà de la longueur carrossable.

5. Dispositif selon l'une quelconque des revendications précédentes caractérisé en ce que la face avant est rehaussable.

## Claims

1. Device for covering and uncovering a vehicle, more especially a haulage or semi-trailer type of vehicle, of the type comprising an assembly of arches mounted on a platform (8) and supporting a foldable cover (3), the device comprising displacement means for displacing the arches carrying the cover, said means being suitable for displacing said arches from a position in which the cover is opened-out and installed above the platform (8) to a position in which the cover is folded, characterised in that it comprises a combination of means so that the folded cover occupies a minimum amount of space, namely a combination of:
- at least one entrainment arch (4), each of its ends terminating in a rolling carriage provided with four rollers, two upper rollers (14) and two lower rollers (13), which are suitable for rolling on both sides of a horizontal rail (15);
- a plurality of intermediate arches (5) having at least three rollers, of which the two lower rollers are suitable for rolling, with at least one upper roller, on both sides of a horizontal rail (15); and
- a cover, comprising three parts, a roof and two lateral faces, which cover is carried by the sliding arches (4, 5), tensioned by arms (10) when the vehicle is covered, and forming regular folds as a result of separators (11) which move outwardly when the cover is folded.

2. Device according to claim 1, characterised in that each horizontal rail (15) is secured laterally on the edge of the platform (8).

3. Device according to at least one of the preceding claims, characterised in that the lower ends of an entrainment arch (4) are joined to two endless entrainment chains connected by pulleys to two central chains actuated by a motor (6).

4. Device according to at least one of the preceding claims, characterised in that each rail (15) comprises a foldable extension suitable for carrying the assembly of arches and cover beyond the length of the vehicle body.

5. Device according to any one of the preceding claims, characterised in that the front face is raisable.

## Patentansprüche

1. Vorrichtung zum Bedecken und Abdecken mit einer Plane für Fahrzeuge, insbesondere für Lastkraftwagen oder Anhänger für Sattelschlepper, mit einer Anzahl von Bügeln, die an einer Grundplatte (8) angebracht sind und eine faltbare Plane (3) tragen, wobei die Vorrichtung Mittel zum Verschieben der die Plane tragenden Bügel aufweist, mit denen die Bügel von einer Stellung, in der die Plane entfaltet und die Grundplatte (8) überdeckend angeordnet ist, in eine Stellung verschiebbar ist, in der Plane gefaltet ist, **dadurch gekennzeichnet**, daß die Vorrichtung eine Kombination von Mitteln aufweist, mit der die gefaltete Plane einen minimalen Platzbedarf beansprucht, nämlich:
- wenigstens einen Antriebsbügel (4), der an jedem seiner Enden ein Fahrgestell mit vier Rollen aufweist, wobei zwei obere Rollen (14) und zwei untere Rollen (13) zum Rollen beidseitig einer Horizontalschiene (15) vorgesehen sind,
- eine Vielzahl von Zwischenbügeln (5) mit wenigstens drei Rollen, wobei beidseitig einer Horizontalschiene (15) zwei zum Abrollen eingerichtete untere Rollen und wenigstens eine obere Rolle vorgesehen sind und
- eine dreiteilige Plane mit einem Dach und zwei Seitenwänden, die durch die verschiebbaren Bügel (4, 5) getragen und durch zirkelartige Ausstellmittel (10) gespannt sind, wenn das Fahrzeug mit der Plane versehen ist, und die unter dem Einfluß von Spreizmitteln (11) regelmäßige Falten bildet, welche sich beim Falten der Plane nach außen ausstellen.

2. Vorrichtung nach Anspruch 1, dadurch gekennzeichnet, daß jede Horizontalschiene (15) längs entlang einer Seitenkante der Grundplatte (8) angebracht ist.

3. Vorrichtung nach wenigstens einem der vorangehenden Ansprüche, dadurch gekennzeichnet, daß die unteren Enden eines Antriebsbügels (4) mit zwei endlosen Antriebsketten über ein Getriebe mit zwei durch einen Motor (6) antreibbaren Zentralketten verbunden ist.

4. Vorrichtung nach wenigstens einem der vorangehenden Ansprüche, dadurch gekennzeichnet, daß jede Schiene (15) einen Verlängerungsfortsatz aufweist, der dazu eingerichtet ist, die Gesamtheit von Bügeln und Plane über die nutzbare Länge hinaus zu tragen.

5. Vorrichtung nach einem der vorangehenden Ansprüche, dadurch gekennzeichnet, daß die Vorderseite erhöhbar ist.
